# EUROPÄISCHE PATENTSCHRIFT

(11) **EP 0 451 930 B1**
(45) Veröffentlichungstag und Bekanntmachung des Hinweises auf die Patenterteilung: **23.06.1993**
(21) Anmeldenummer: 91250088.1
(22) Anmeldetag: 02.04.1991
(51) Int. Cl.: F16L 13/14, F16L 19/00, B25B 27/02

(54) **Verfahren zur Herstellung einer unlösbaren, dichten Rohrverbindung**
Process for manufacturing a fixed, sealed pipe connection
Procédé pour la fabrication d'un raccord de tuyau étanche indétachable

(30) Priorität: 12.04.1990 DE 4012504
(43) Veröffentlichungstag der Anmeldung: 16.10.1991
(73) Patentinhaber: MANNESMANN Aktiengesellschaft, 40027 Düsseldorf (DE)
(72) Erfinder: Unewisse, Heinz, Ing., W-4330 Mühlheim/Ruhr (DE)
(74) Vertreter: Presting, Hans-Joachim, Dipl.-Ing.

(56) Entgegenhaltungen:
- CH-A- 577 366
- CH-A- 639 740
- DE-A- 2 719 882
- DE-C- 3 834 353
- GB-A- 2 059 533

## Beschreibung

Die Erfindung betrifft ein Verfahren zur Herstellung einer unlösbaren, dichten Rohrverbindung gemäß dem Gattungsbegriff des Anspruches 1.

Das gattungsgemäße Verfahren zur Herstellung einer unlösbaren, dichten Rohrverbindung, bestehend aus einem mindestens ein glattendiges Rohrende umfassenden und auf der Innenseite im Abstand zum offenen Ende einen Anschlag aufweisenden Preßfitting, bei dem zuerst das Rohr und der Preßfitting axial ineinander geschoben werden und anschließend mittels eines den Preßfitting umfassenden Preßwerkzeuges, das mehrere Backen aufweist, der Preßfitting nach dem Ansetzen des Preßwerkzeuges durch die zueinander bewegbaren Backen kraft- und formschlüssig mit dem eingeschobenen Rohrende verpreßt wird, ist bekannt (siehe Prospekt Mannesmann Edelstahlrohr GmbH, Ausgabe 1988 bzw DE-C-38 34 353). Dieses Verfahren, bekannt unter dem Namen Mannesmann Preßfitting-System, hat sich seit Jahren in der Heizungs- und Installationstechnik bewährt und ist im Begriff weitere Anwendungsgebiete zu erobern.

Die Zuverlässigkeit der Rohrverbindung ist im wesentlichen abhängig von der Qualität der zu verbindenden Teile und des eingesetzten Runddichtringes sowie von der Beachtung der Montagevorschriften. Auf den letztgenannten Punkt wird in dem schon genannten Prospekt in Kapitel 4 (Verlegeanleitung) unter Bezugnahme auf die Abbildung 6f hingewiesen. Danach sollen das Rohr und der Preßfitting unter leichtem Drehen und gleichzeitigem Drücken in axialer Richtung bis zum Anschlag des Preßfittings ineinandergeschoben werden, da eine zu geringe Einschublänge die Festigkeit der Verbindung beeinträchtigen kann.

Das System bietet insofern eine Kontrolle der Einschubstellung an, als die unterschiedlichen Fittingformen, wie bereits schon erwähnt, auf der Innenseite einen im Abstand zum offenen Ende angeordneten Anschlag aufweisen. Der Abstand des Anschlages zum offenen Ende ist dabei so gewählt, daß dieser mindestens der erforderlichen Einschublänge im Sinne einer ordnungsgemäßen Verpressung entspricht. Der Anschlag bildet damit einen Widerstand gegen das weitere axiale Hineinschieben des Rohres und ist ein Signal für den Monteur, daß das Rohr die gewünschte Einschubstellung erreicht hat.

Trotz dieser Kontrollmöglichkeit hängt die Dauerhaltbarkeit der Rohrverbindung in diesem Punkt auch von der Zuverlässigkeit des Monteurs ab. Im Sinne einer zusätzlichen Kontrolle ist bereits vorgeschlagen worden, die erforderliche Einstecklänge am Rohrende zu markieren, z.B. in Form eines Dreiecks oder eines Pfeiles oder dergleichen.

Dieser Vorschlag hat den Nachteil, daß je nach den Gegebenheiten auf der Baustelle diese Markierung nicht ohne weiteres erkennbar ist und falls die Markierung nicht über den ganzen Umfang aufgetragen ist, gerade auf der dem Auge abgewandten Seite liegen kann. Außerdem kann eine Markierung in der gleichen Weise wie eine Montagevorschrift ebenfalls nicht beachtet werden, da unabhängig davon die Qualität der hergestellten Rohrverbindung weiterhin auch von der Zuverlässigkeit und Gewissenhaftigkeit der die Rohrverbindung herstellenden Person abhängig ist.

Aufgabe der Erfindung ist es, ein Verfahren zur Herstellung einer unlösbaren, dichten Rohrverbindung anzugeben, das personenunabhängig eine Kontrolle der ordnungsgemäßen Einschubstellung ermöglicht und damit die Herstellung einer einwandfreien Rohrverbindung sicherstellt.

Diese Aufgabe wird mit den im kennzeichnenden Teil des Anspruches 1 angegebenen Merkmalen gelöst. Vorteilhafte Weiterbildungen ergeben sich aus den Unteransprüchen.

Das erfindungsgemäße Verfahren zeichnet sich dadurch aus, daß durch eine Blockade des Schließmechanismus verhindert wird, daß eine Verpressung auch dann stattfinden kann, wenn das Rohr und der Preßfitting nicht weit genug ineinander geschoben worden sind, sondern eine unerwünschte Einschubstellung einnehmen. Im Regelfall wird man davon ausgehen können, daß das Rohr und der Preßfitting entsprechend der Montagevorschrift ordnungsgemäß bis zum Anschlag des Preßfittings ineinandergeschoben worden sind und anschließend die einwandfreie Verpressung erfolgen kann. Um aber von der Gewissenhaftigkeit und Zuverlässigkeit des Monteurs unabhängig zu sein, wird vorgeschlagen, daß nach dem Ansetzen des Preßwerkzeuges mittels einer am Preßwerkzeug angeordneten Vorrichtung das Rohr bzw. der Preßfitting zwangsweise einer in Verschieberichtung wirkenden veränderbaren Kraft ausgesetzt wird und die Schließbewegung der Backen erst dann auslösbar ist, wenn die Kraft einen Wert annimmt, der größer ist als eine vorgegebene einstellbare Ansprechschwelle. Geht man von dem zu erwartenden Regelfall aus, daß das Rohr und der Preßfitting ordnungsgemäß bis zum Anschlag manuell ineinander geschoben werden, dann wird infolge des Widerstandes des Anschlages die erfindungsgemäß nach dem Ansetzen des Preßwerkzeuges zwangsweise auf das Rohr bzw. den Preßfitting in Verschieberichtung wirkende veränderbare Kraft wertmäßig steil ansteigen und schlagartig die vorgegebene Ansprechschwelle erreichen. Sobald die Kraft wertmäßig die vorgegebene Ansprechschwelle erreicht hat, wird die Blockade der Schließbewegung der Backen aufgehoben und die Verpressung des Preßfittings mit dem eingeschobenen Rohrende ausgelöst. Durch dieses Verfahren wird personenunabhängig die ordnungsgemäße Einschubstellung kontrolliert und eine Verpressung mit einer nicht erwünschten Einschubstellung verhindert.

Die auf das Rohr bzw. auf den Preßfitting einwirkende Kraft wird nun so gewählt, daß sie mindestens gleich oder etwas größer ist als die für eine axiale Verschiebung des Rohres bzw. des Preßfittings erforderliche Kraft unter Berücksichtigung der einseitigen Kumulation aller die die Verschiebung beeinflussenden Parameter, aber immer kleiner ist als die vorgegebene Ansprechschwelle. Solche der axialen Verschiebung entgegenstehenden Parameter sind z. B. die Toleranz des äußeren Durchmessers des einzuschiebenden Rohres, die Toleranz des wulstförmigen Endes des Preßfittings, die Dickentoleranz des eingelegten Dichtringes und die Reibungsverhältnisse zwischen Rohr und Dichtring. Die mit der einwirkenden Kraft zwangsweise mögliche axiale Verschiebung des Rohres bzw. des Preßfittings wird begrenzt, wobei dieser Wert vorzugsweise im Bereich zwischen 2 - 5 mm liegt und im wesentlich von der Nennabmessung der Rohrverbindung abhängig ist. Die vorgegebene Begrenzung der zwangsweisen axialen Verschiebung, die um ein Mehrfaches geringer ist als der vom offenen Ende bis zum Anschlag des Preßfittings sich ergebende Abstand, wird bewußt gewählt, um die manuelle Handbarkeit des Preßwerkzeuges in bezug auf sein Gewicht aufrechtzuerhalten. Außerdem soll der zur Verfügung stehende Bewegungsfreiraum im Montagebereich nicht durch ein zu großes Preßwerkzeug weiter eingeschränkt werden.

Für den Fall, daß aus welchen Gründen auch immer das Rohr und der Preßfitting entgegen der Montagevorschrift nicht ordnungsgemäß bis zum Anschlag ineinandergeschoben worden sind, verbleibt zwischen der Stirnseite des eingeschobenen Rohres und dem Anschlag ein Abstand. Bei dieser Konstellation ist erfindungsgemäß die Schließbewegung der Backen immer dann auslösbar, wenn der nach dem manuellen Ineinanderschieben von Rohr und Preßfitting verbleibende Abstand der Rohrstirnseite bis zum Anschlag des Preßfittings gleich oder kleiner ist als die maximal vorgegebene Strecke der zwangsweisen axialen Verschiebung des Rohres bzw. des Preßfittings. Um hierfür ein Beispiel zu geben, soll der nach dem manuellen Ineinanderschieben verbleibende Abstand 3 mm und die maximal vorgegebene Strecke der zwangsweisen axialen Verschiebung 4 mm betragen. Daraus ergibt sich, daß nach der zwangsweisen axialen Verschiebung um 3 mm die Rohrstirnseite am Anschlag des Preßfittings zur Anlage kommt und die einwirkende Kraft infolge des Widerstandes des Anschlages steil ansteigt, so daß schlagartig die Ansprechschwelle erreicht wird. Bei Erreichen dieser Ansprechschwelle ist, wie bereits beschrieben, die Schließbewegung der Backen auslösbar.

Im Falle eines größeren verbleibenden Abstandes ist die Schließbewegung der Backen erst dann auslösbar, wenn nach einem weiteren manuellen Ineinanderschieben oder einer mehrfachen Wiederholung der zwangsweisen Verschiebung die Rohrstirnseite am Anschlag zur Anlage kommt oder der verbleibende Abstand gleich oder kleiner ist als die maximal vorgegebene Strecke der zwangsweisen axialen Verschiebung des Rohres bzw. des Preßfittings. Der Vorteil des Verfahrens ist darin zu sehen, daß personenunabhängig zwangsweise für jede vorstellbare Einschubstellung nur dann eine ordnungsgemäße Verpressung auslösbar ist, wenn zuvor die unerwünschte Einschubstellung manuell durch weiteres Nachschieben des Rohres oder automatisch durch mehrfach wiederholtes zwangsweises Verschieben beseitigt ist.

In der Zeichnung wird anhand einer grafischen Darstellung das erfindungsgemäße Verfahren näher erläutert.

Es zeigen:
- Figur 1: im Teilquerschnitt ein bis zum Anschlag des Preßfittings eingeschobenes Rohr und die grafische Darstellung des Lösens der Schließblockade
- Figur 2: eine grafische Darstellung der Abhängigkeit der Kraft K vom Weg W bei einem unvollständig in den Preßfitting eingeschobenen Rohr
- Figur 3: wie Figur 1, jedoch mit einen noch weniger weit eingeschobenen Rohr

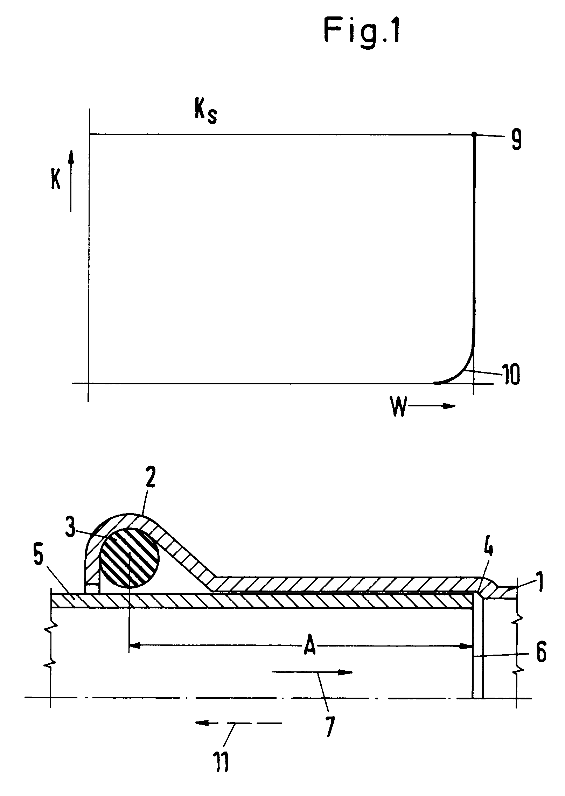

Figur 1 zeigt in einem Teilquerschnitt den Preßfitting 1 mit seinem wulstförmig ausgebildeten Ende 2 und den darin eingelegten Dichtring 3, sowie den auf der Innenseite des Preßfittings 1 angeordneten Anschlag 4. In dieser Figur 1 ist der zu erwartende Regelfall dargestellt, daß das Rohr 5 und der Preßfitting ordnungsgemäß bis zum Anschlag 4 ineinandergeschoben worden sind und die Stirnseite 6 des Rohres 5 am Anschlag 4 zur Anlage kommt. Erfindungsgemäß wird nun nach dem Ansetzen des hier nicht dargestellten Preßwerkzeuges mittels einer am Preßwerkzeug angeordneten Vorrichtung (hier ebenfalls nicht dargestellt) beispielsweise das Rohr 5 einer in Verschieberichtung wirkenden veränderbaren Kraft ausgesetzt. Zur Veranschaulichung ist die wirksame Kraft durch einen Pfeil 7 gekennzeichnet. Statt des Rohres 5 könnte ebensogut der Preßfitting 1 einer Kraft ausgesetzt werden, hier durch den gestrichelt gezeichneten Pfeil 11 gekennzeichnet. Der beim manuellen Ineinanderschieben von Rohr 5 und Preßfitting 1 zurückzulegende Weg ist mit den Buchstaben A gekennzeichnet, der gleich ist dem Abstand von der engsten Stelle im Dichtringbereich 3 bis zum Anschlag 4 des Preßfittings 1. Die hier vorliegende ordnungsgemäße Einschubstellung wird erfindungsgemäß personenunabhängig in der Weise kontrolliert, daß die Schließbewegung der Backen zum Verpressen des Preßfittings 1 mit dem Rohr 5 erst dann auslösbar ist, wenn die zwangsweise in Verschieberichtung wirkende Kraft 7 einen Wert erreicht, der größer ist als eine vorgegebene Ansprechschwelle Kₛ. In der über dem Teilquerschnitt liegenden grafischen Darstellung ist auf der Ordinate die Kraft und auf der Abszisse der Weg abgetragen. Die auf das Rohr 5 einwirkende Kraft 7 versucht das Rohr 5 weiter in axialer Richtung zu verschieben, wird aber durch den Anschlag 4 daran gehindert. Das hat zur Folge, daß die Kraft 7 wertemäßig steil ansteigt, wie durch die Kraftverlaufslinie 10 angedeutet und schlagartig die Ansprechschwelle Kₛ erreicht. Sobald die Kraft 7 die vorgegebene Ansprechschwelle Kₛ erreicht hat 9, wird die Blockade der Schließbewegung der Backen des Preßwerkzeuges aufgehoben und es erfolgt eine einwandfreie Verpressung.

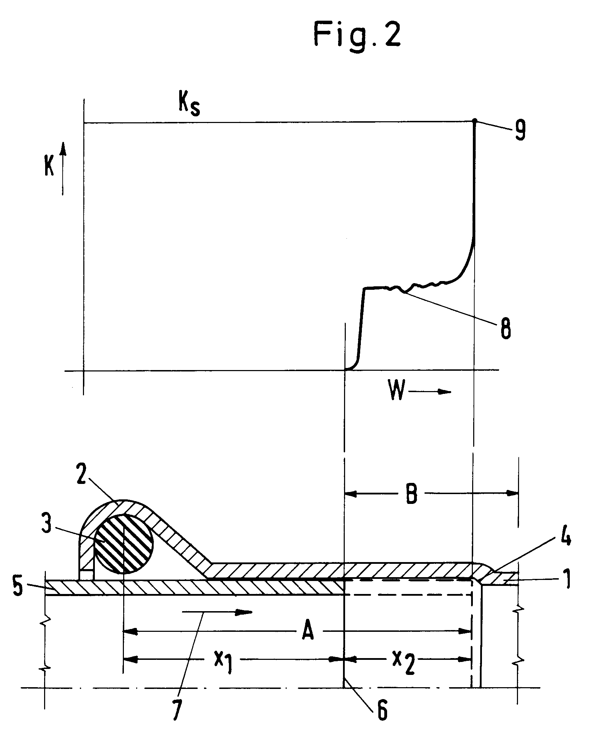

Figur 2 zeigt im gleichen Teilquerschnitt wie Figur 1 ein eingeschobenes Rohr 5, aber in einer anderen Einschubstellung.

Das in den Preßfitting 1 bereits eingeführte Rohr 5 ist ausgehend von der engsten Stelle im Dichtringbereich 3 manuell um den Betrag x₁ axial in den Preßfitting 1 geschoben worden. In dem in dieser Figur 2 dargestellten Beispiel ist entgegen der Montagevorschrift das Rohr 5 nicht bis zum Anschlag 4 geschoben worden. Zwischen der Stirnseite 6 des Rohres 5 und dem Anschlag 4 des Preßfittings 1 verbleibt ein mit x₂ gekennzeichneter Abstand, wobei dieser hier übertrieben groß dargestellt wurde. Bisher war es möglich, daß auch bei einer solchen Zwischenstellung des eingeschobenen Rohres 5 die Verpressung vorgenommen werden konnte, unabhängig von der Frage, ob bei der hier gezeigten Zwischenstellung schon eine nicht erwünschte Einschubstellung vorliegt oder nicht. Erfindungsgemäß wird nun nach dem Ansetzen des hier nicht dargestellten Preßwerkzeuges das bereits eingeschobene Rohr 5 gefaßt und durch eine Kraft 7 axial in Richtung des Anschlages 4 des Preßfittings 1 verschoben. Die noch zurückzulegende Strecke bis zum Anschlag 4 ist mit x₂ bezeichnet, wobei die Summe von x₁ und x₂ gleich dem vorgegebenen Abstand A von der engsten Stelle im Dichtringbereich 3 bis zum Anschlag 4 entspricht. Nach der zwangsweisen Verschiebung um den Betrag x₂, der in diesem Beispiel kleiner als der maximal vorgegebene Verschiebeweg B sein soll, kommt die Stirnseite 6 des Rohres 5 (hier gestrichelt dargestellt) am Anschlag 4 zur Anlage. Die für die zwangsweise Verschiebung erforderliche Kraft ist im darüberliegenden Diagramm dargestellt. Der Kraftbedarf setzt mit Beginn der Verschiebung ein und erreicht einen bestimmten Betrag 8, der abhängig ist von den Toleranzen der zu verbindenden Teile und von den Reibungsverhältnissen. Sobald das zwangsweise verschobene Rohr 5 am Anschlag 4 zur Anlage kommt, steigt der Kraftbedarf steil an und erreicht einen Wert 9, der gleich ist einer vorgegebenen Ansprechschwelle Kₛ. Sobald der Kraftbedarf für die zwangsweise axiale Verschiebung des Rohres 5 die vorgegebene Ansprechschwelle Kₛ erreicht hat 9, wird die Blockade der Schließbewegung der Backen des Preßwerkzeuges aufgehoben.

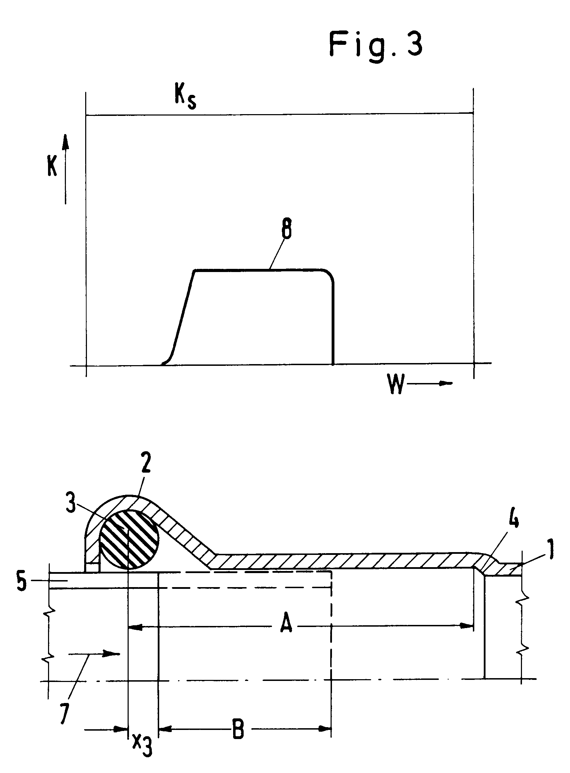

In Figur 3 ist das Extrembeispiel dargestellt, daß das Rohr 5 nur gerade eben eingeführt ist und der bereits zurückgelegte Weg, hier mit x₃ bezeichnet, klein gegenüber der in Figur 2 mit x₁ bezeichneten Strecke ist. Nach dem Ansetzen des Preßwerkzeuges wird das Rohr 5 um den Betrag B, d. h. um den maximal möglichen Weg zwangsweise axial verschoben. Danach nimmt das Rohr 5 eine Zwischenstellung ein, hier gestrichelt dargestellt, die in diesem Fall einer unerwünschten Einschubstellung entspricht. Aus der darüberliegenden grafischen Darstellung ist zu entnehmen, daß der Kraftbedarf 8, er soll beispielsweise gleich groß sein wie für das Beispiel in Figur 2, noch erheblich unter der vorgegebenen Ansprechschwelle Kₛ liegt und deshalb auch am Ende der zwangsweisen Verschiebung um den Betrag B die Blockierung der Schließbewegung weiterhin aufrechterhalten bleibt. Eine Verpressung ist in diesem Zustand ausgeschlossen. Um nun eine ordnungsgemäße Verpressung durchführen zu können, muß das Rohr 5 weiter in Richtung Anschlag 4 geschoben werden. Dies kann in der Weise geschehen, daß von Hand das Rohr 5 direkt bis zum Anschlag 4 (siehe Figur 1) oder vergleichbar weit wie in Figur 2 dargestellt, geschoben wird. Danach wird das Preßwerkzeug erneut angesetzt und die zwangsweise Verschiebung wird wiederholt, wobei im Falle der manuellen Verschiebung bis zum Anschlag 4 die Kraft 7 schlagartig die Ansprechschwelle Kₛ erreicht und die Blockade der Schließbewegung dadurch aufgehoben wird. Das Schiebeverfahren kann aber auch in der Weise automatisiert werden, daß die zwangsweise Verschiebung um den Betrag B mehrfach wiederholbar ist, bis das Rohr 5 am Anschlag 4 zur Anlage kommt und danach die Verpressung erfolgen kann.

## Patentansprüche

1. Verfahren zur Herstellung einer unlösbaren, dichten Rohrverbindung zwischen einem glatten Rohrende und einem dieses umfassenden Preßfitting, der auf seiner Innenseite im Abstand zu seinem offenen Ende einen Anschlag aufweist, wonach
- zuerst das Rohr und der Preßfitting axial ineinander geschoben werden und
- anschließend mittels eines um den Preßfitting aufgesetzten Preßwerkzeuges, das mehrere Backen aufweist, der Preßfitting durch die zueinander bewegbaren Backen kraft- und formschlüssig mit dem eingeschobenen Rohrende verpreßt wird,
dadurch gekennzeichnet, daß
- nach dem Ansetzen des Preßwerkezuges das manuell bereits in den Preßfitting eingeschobene Rohr bzw. der auf das Rohrende aufgeschobene Preßfitting mittels einer am Preßwerkzeug angeordneten Vorrichtung zwangsweise einer axial wirkenden veränderbaren Kraft ausgesetzt wird und
- die Schließbewegung der Backen für die Verpressung des Preßfittings erst dann auslösbar ist, wenn diese Kraft einen Wert annimmt, der größer ist
als eine vorgegebene einstellbare Ansprechschwelle.

2. Verfahren nach Anspruch 1,
dadurch gekennzeichnet,
daß die auf das Rohr bzw. auf den Preßfitting wirkende Kraft mindestens gleich oder etwas größer ist als die für eine axiale Verschiebung des Rohres bzw. des Preßfittings erforderliche Kraft unter Berücksichtigung der einseitigen Kumulation aller die die Verschiebung beeinflussenden Parameter, aber immer kleiner ist als die vorgegebene Ansprechschwelle.

3. Verfahren nach Anspruch 2,
dadurch gekennzeichnet,
daß die Strecke der zwangsweise möglichen axialen Verschiebung des Rohres bzw. des Preßfittings begrenzt ist und um ein Mehrfaches geringer ist als der vom offenen Ende bis zum Anschlag des Preßfittings sich ergebende Abstand.

4. Verfahren nach Anspruch 3,
dadurch gekennzeichnet,
daß die Schließbewegung der Backen immer dann auslösbar ist, wenn der nach dem manuellen Ineinanderschieben von Rohr und Preßfitting verbleibende Abstand der Rohrstirnseite bis zum Anschlag des Preßfittings gleich oder kleiner ist als die maximal vorgegebene Strecke der zwangsweisen axialen Verschiebung des Rohres bzw. des Preßfittings.

5. Verfahren nach Anspruch 4,
dadurch gekennzeichnet,
daß im Falle eines größeren verbleibenden Abstandes die Schließbewegung der Backen erst dann auslösbar ist, wenn nach einem weiteren manuellen Ineinanderschieben oder einer mehrfachen Wiederholung der zwangsweise axialen Verschiebung die Rohrstirnseite am Anschlag zur Anlage kommt.

## Claims

1. A method for the production of an undetachable tight pipe connection between a smooth pipe end and a press fitting surrounding the latter, which press fitting has a stop on its inner side at a distance from its open end, according to which
- firstly the pipe and the press fitting are pushed axially into each other and
- then by means of a pressing tool which is placed around the press fitting and has a plurality of jaws, the press fitting is pressed in a force-locking and form-locking manner with the pushed in pipe end by means of the jaws, which are movable with respect to each other,
characterised in that
- after the pressing tool is put in place, the pipe, which has already been pushed manually into the press fitting, or respectively the press fitting which is pushed onto the pipe end, is compulsorily exposed to a changeable, axially-acting force by means of a device arranged on the pressing tool and
- the closing movement of the jaws for the pressing of the press fitting is only able to be initiated when this force assumes a value which is greater than a prescribed adjustable respose threshold.

2. A method according to Claim 1,
characterised in that
the force acting on the pipe or on the press fitting is at least equal to, or slightly greater than the force necessary for an axial displacement of the pipe or of the press fitting, taking into acount the accumulation on one side of all the parameters influencing the displacement, but is always smaller than the prescribed respose threshold.

3. A method according to Claim 2,
characterised in that
the extent of the compulsorily possible axial displacement of the pipe or of the press fitting is limited and is many times smaller than the distance produced from the open end up to the stop of the press fitting.

4. A method according to Claim 3,
characterised in that
the closing movement of the jaws is.always able to be initiated.when the distance of the front end of the pipe up to the stop of the press fitting, remaining after manually pushing the pipe and press fitting into each other, is the same,as or smaller than the maximum prescribed extent of the compulsory axial displacement of the pipe or of the press fitting.

5. A method according to Claim 4,
characterised in that
in the case of a greater remaining distance, the closing movement of the jaws is only able to be initiated when, after further manual pushing into each other or after repeating several times the compulsory axial displacement, the front end of the pipe comes to rest against the stop.

## Revendications

1. Procédé pour la fabrication d'une liaison étanche indétachable entre une extrémité de tube lisse et un raccord entourant celle-ci, qui présente une butée sur son côté interne à distance de son extrémité ouverte, le tube et le raccord étant tout d'abord emmanchés axialement l'un dans l'autre, puis, au moyen d'un outil de pressage, disposé autour du raccord, qui présente plusieurs mâchoires, le raccord est pressé avec l'extrémité de tube introduite, de façon mécanique et par adhérence, par les mâchoires mobiles les unes par rapport aux autres,
caractérisé en ce que, après la mise en place de l'outil de pressage, le tube déjà manuellement introduit dans le raccord ou le raccord enfilé sur l'extrémité de tube est soumis, de façon forcée, à une force modifiable agissant axialement, au moyen d'un dispositif agencé sur l'outil de pressage, et le mouvement de fermeture des mâchoires pour le pressage du raccord ne peut être déclenché que lorsque cette force prend une valeur qui est plus grande qu'un seuil de réponse réglable prédéfini.

2. Procédé selon la revendication 1,
caractérisé en ce que la force agissant sur le tube ou sur le raccord est au moins égale à la force nécessaire pour un déplacement axial du tube ou du raccord ou quelque peu plus grande que celle-ci, en tenant compte de la cumulation unilatérale de tous les paramètres influençant le déplacement, mais toujours plus petite que le seuil de réponse prédéfini.

3. Procédé selon la revendication 2,
caractérisé en ce que l'étendue du déplacement axial possible de façon forcée du tube ou du raccord est limitée et est plus petite d'un multiple que la distance existant de l'extrémité ouverte jusqu'à la butée du raccord.

4. Procédé selon la revendication 3,
caractérisé en ce que le mouvement de fermeture des mâchoires peut être toujours déclenché lorsque la distance, demeurant après l'insertion manuelle l'un dans l'autre du tube et du raccord, de la face frontale du tube à la butée du raccord est égale à l'étendue maximale prédéfinie du déplacement axial forcé du tube ou du raccord ou plus petite que celle-ci.

5. Procédé selon la revendication 4,
caractérisé en ce que, dans le cas d'une distance demeurant plus grande, le mouvement de fermeture des mâchoires ne peut être déclenché que lorsque, après une insertion manuelle supplémentaire ou une répétition du déplacement axial forcé, la face frontale du tube vient en appui contre la butée.
